# EUROPEAN PATENT SPECIFICATION

(11) **EP 2 464 508 B1**
(45) Date of publication and mention of the grant of the patent: **01.01.2014**
(21) Application number: 10745448.0
(22) Date of filing: 13.08.2010
(51) Int. Cl.: B29D 30/24

(54) **TYRE BUILDING DRUM FOR BUILDING AN UNVULCANISED TYRE**
REIFENBAUTROMMEL ZUR HERSTELLUNG VON UNVULKANISIERTEN LUFTREIFEN.
TAMBOUR POUR LA FABRICATION DES PNEUS NON VULCANISÉS.

(30) Priority: 13.08.2009 NL 2003350; 13.08.2009 US 233543 P
(43) Date of publication of application: 20.06.2012
(73) Proprietor: VMI Holland B.V., 8161 RK Epe (NL)
(72) Inventor: DE GRAAF, Martin, NL-8166 KZ Emst (NL)
(74) Representative: Peters, Sebastian Martinus
(86) International application number: PCT/NL2010/050510
(87) International publication number: WO 2011/019280

(56) References cited:
- WO-A1-2009/070020
- US-A- 2 931 420
- US-A- 3 730 059
- US-A- 3 873 398
- US-A1- 2001 050 148
- US-A1- 2003 168 144

## Description

### BACKGROUND OF THE INVENTION

The invention relates to a tyre building drum for building an unvulcanised tyre using rubber tyre components, wherein the tyre building drum comprises a drum shaft and two drum halves arranged at least almost substantially symmetrical with respect to the centre of the tyre building drum and around the drum shaft, which drum halves can be moved in axial direction along the drum shaft, wherein each drum half comprises a folding arm unit having folding arms that are connected to the drum half in question in a swivelling manner.

Such a tyre building drum is known from EP-B1-1.439.054. Said known tyre building drum comprises a base spindle for the folding units, about which base spindle a hollow second spindle for the bead core clamping units is coaxially arranged. The base spindle can be coupled to the hollow second spindle by means of a connectable coupling, so that both spindles can be coupled to each other (for moving the entire drum half) and be detached from each other. Although with respect to other tyre building drums that use a pneumatic drive for the folding arm carrier bodies, said known tyre building drum provides a considerable improvement regarding the synchronous lifting of the two folding arm units due to use of in particular the base spindle, the known tyre building drum has some drawbacks. For instance the connectable coupling is not only a relatively expensive and complex additional part, in case of failure it is also difficult to repair this connectable coupling. Furthermore due to use of the two coaxial spindles in the drum shaft, the tyre building drum is relatively long and bulky.

In addition, WO 2009/070020 discloses two threaded spindles, which are arranged in parallel inside the drum main shaft. The folding arm units can be moved synchronously with respect to each other in axial direction of the tyre building drum by rotating a first one of the two spindles, and the two drum halves can be moved synchronously with respect to each other in axial direction by rotating the second one of the two spindles.

### SUMMARY OF THE INVENTION

It is among others an object of the invention to provide a tyre building drum for building an unvulcanised tyre that is maintenance friendlier and that can be designed in a more compact manner.

For that purpose according to the invention a tyre building drum as defined in claim 1, for building an unvulcanised tyre of the type mentioned in the preamble is characterised in that the tyre building drum comprises a main housing wherein the drum shaft projects from the main housing, wherein at least two pull/push rods are arranged in the drum shaft which pull/push rods are movable in axial direction and extend up into the main housing and in the main housing are coupled to a drive mechanism, wherein a first pull/push rod of the at least two pull/push rods is coupled to the folding arm unit of the first drum half, and a second pull/push rod of the at least two pull/push rods is coupled to the folding arm unit of the second drum half. The tyre building drum according to the invention is thus provided with an external actuator for a movement and turning up of the folding arms, which actuator is placed outside of the drum shaft. In that way, at least for these actions, it will no longer be necessary to place spindles in the hollow drum shaft, as a result of which the tyre building drum can be designed in a maintenance friendlier and more compact way.

A further advantage of the use of pull/push rods is that in that way a low play or even a play-free transmission from the drive mechanism to the folding arm units of the drum halves can be realised.

All other driven movements of the drum halves and/or parts thereof, for instance shoulder supports or bead clamping mechanisms, can on the one hand be driven by means of known actuators, such as one or more spindles or one or more pneumatically driven cylinders. On the other hand in one embodiment of the building drum according to the invention, one or more of these drives of the drum halves and/or parts thereof can also be driven by means of pull/push rods that are placed in the drum shaft. In an advantageous embodiment the at least two pull/push rods further comprise a third pull/push rod that is coupled to the first drum half, and a fourth pull/push rod that is coupled to the second drum half.

In one embodiment the at least two pull/push rods are placed concentrically in the drum shaft. The external drive mechanism is coupled to the drum halves and/or their folding arm units via the at least two tubular pull/push rods that are telescopically retractable in a concentric way, and are preferably placed substantially in the centre line of the drum shaft.

In the manufacturing of an unvulcanised tyre using rubber tyre components, it is common to let the drum shaft with the building drum halves rotate. In one embodiment the main housing comprises a bearing device, wherein with a first outer end the drum shaft is rotatably placed in the bearing device. In one embodiment the pull/push rods are substantially rotation-fixedly placed in the drum shaft. In that way the pull/push rods will rotate along with the drum shaft, as a result of which friction between the pull/push rods and the drum shaft is considerably reduced.

In order to couple the rotatable pull/push rods with a drive mechanism in the main housing, the at least two pull/push rods in one embodiment extend beyond the first outer end of the drum shaft and are rotatably coupled to the drive mechanism. The rotatable coupling ensures that the pull/push rods that are rotatable around the centre line of the drum shaft, can be coupled to a substantially stationary and/or fixed drive mechanism in the main housing.

In one embodiment the main housing comprises a drum shaft driving motor which by means of a transmission is coupled to the drum shaft, wherein the transmission is placed at a side of the bearing device that extends away from the drive mechanism. In one embodiment the transmission is placed outside of the main housing. Examples of such transmissions are a belt transmission, a gear wheel transmission, a quill drive motor, etc. The placement of the transmission according to this embodiment makes it easy to keep the transmission in good repair.

In one embodiment the transmission comprises a belt transmission. In that case the transmission from the motor to the drum shaft is ensured by a drive belt, such as a toothed belt. The drive belt can easily be removed from the drum shaft driving motor, be passed over the drum shaft, and be discharged at an outer end of the drum shaft that faces away from the bearing device. In a comparable manner a new drive belt can be supplied via the outer end of the drum shaft that faces away from the bearing device, be passed to the main housing along the drum shaft, and be placed over the drum shaft and the drum shaft driving motor.

In one embodiment the drive mechanism is provided with a separate drive for each pull/push rod of the at least two pull/push rods. In one embodiment the separate drives each preferably comprise a linear motor or a spindle drive. In that way all pull/push rods can be individually driven.

In an alternative embodiment the drive mechanism comprises a first spindle, wherein the first spindle comprises thread which on either side of the middle of the drive mechanism has an equally large pitch but of an opposite direction, wherein on the first spindle on either side of the middle of the drive mechanism a first flight nut and a second flight nut are arranged, wherein the first and second flight nut are coupled to the first pull/push rod and the second pull/push rod, respectively. In this way a swivelling of the folding arms of both first and second drum halves is driven via the first and second pull/push rod, respectively, that are both coupled to the first spindle. In that way an improvement regarding the synchronous lifting of the folding arms is achieved.

In one embodiment the first pull/push rod is coupled to the first flight nut in a substantially axially adjustable manner. In that way the position of the folding arms of the first drum half is adjustable, particularly with respect to the position of the folding arms of the second drum half. The second pull/push rod can be fixedly connected to the second flight nut.

In a further embodiment the drive mechanism comprises a second spindle, wherein the second spindle comprises thread which on either side of the middle of the drive mechanism has an equally large pitch but of an opposite direction, wherein on the second spindle on either side of the middle of the drive mechanism a third flight nut and a fourth flight nut are arranged, wherein the third and fourth flight nut are coupled to the third pull/push rod and the fourth pull/push rod, respectively. In this way a shifting of both first and second drum halves along the drum shaft is driven via the third and fourth pull/push rod, respectively, that are both coupled to the second spindle. In that way an improvement regarding the synchronous shifting of the drum halves is achieved.

In a further embodiment the third pull/push rod is coupled to the third flight nut in a substantially axially adjustable manner. In that way the position of the first drum half is adjustable, particularly with respect to the position of the second drum half. The fourth pull/push rod can be fixedly connected to the fourth flight nut.

In one embodiment the first spindle and the second spindle are each individually drivable. It is noted that for shifting the drum halves without turning up the folding arms, on the one hand the first and third pull/push rod are substantially jointly driven and on the other hand the second and fourth pull/push rod are substantially jointly driven. This can be achieved by driving the first and second spindle jointly. For turning up the folding arms without shifting the drum halves, on the one hand the first pull/push rod is moved with respect to the third pull/push rod and on the other hand the second pull/push rod is moved with respect to the fourth pull/push rod. This can be achieved by driving just the second spindle.

In an advantageous embodiment of a tyre building drum according to the invention each spindle is driven by its own servomotor. In particular two servomotors can be accurately synchronously driven for shifting the drum halves without turning up the folding arms. In this way also the first spindle can be accurately moved with respect to the second spindle for driving the folding arms. In this way a highly accurately functioning tyre building drum can be realised.

In a further advantageous embodiment of a tyre building drum according to the invention the spindles are driven by means of a hydraulic drive. Up until now it was not common to provide tyre building drums with a hydraulic drive because the fluids used for the hydraulic drive are not compatible with unvulcanised rubber. However, as the tyre building drum according to the invention uses a drive placed outside of the drum shaft, particularly placed in the main housing, use can be made here of a hydraulic drive.

In one embodiment the first spindle and the second spindle are placed substantially on either side of a centre line of the drum shaft. In that way the drive mechanism can be designed substantially compact, wherein the spindles and the pull/push rods placed in between them are situated substantially in one plane.

In one embodiment the drum shaft is provided with a first drum shaft slot for accommodating a first connecting part for connecting the first pull/push rod to the folding arm unit of the first drum half.

In one embodiment the drum shaft is provided with a second drum shaft slot for accommodating a second connecting part for connecting the second pull/push rod to the folding arm unit of the second drum half.

In a further embodiment the first drum shaft slot is adapted for accommodating a third connecting part for connecting the third pull/push rod to the first drum half.

In a further embodiment the second drum shaft slot is adapted for accommodating a fourth connecting part for connecting the fourth pull/push rod to the second drum half.

According to a second aspect the invention provides a tyre building drum for building an unvulcanised tyre using rubber tyre components, wherein the tyre building drum comprises a main housing having a drum shaft extending from the main housing and two first and second drum halves arranged at least almost substantially symmetrical with respect to the centre of the tyre building drum and around the drum shaft, which drum halves can be moved in axial direction along the drum shaft, wherein each drum half comprises a folding arm unit having folding arms, that are connected to the drum half in question in a swivelling manner, wherein the folding arm unit is movable in axial direction along the drum shaft, wherein the main housing comprises a bearing device and wherein with a first outer end the drum shaft is rotatably placed in the bearing device, wherein the main housing comprises a drum shaft driving motor which by means of a belt transmission is coupled to the drum shaft, wherein the belt transmission is placed near a side of the bearing device that faces a second outer end extending away from the first outer end. In one embodiment the belt transmission is placed outside of the main housing. The drive belt can then easily be removed from the drum shaft driving motor as described before, as a result of which building up the tyre building drum according to the invention and maintenance is made easier.

In one embodiment of the tyre building drums described above, the drum shaft comprises a first and a second drum shaft portion, wherein the first drum shaft portion comprises the first outer end that is rotatably placed in the bearing device, wherein a second outer end of the first drum shaft portion that extends away from the first outer end comprises a coupling member for substantially axially and detachably coupling the first drum shaft portion to the second drum shaft portion. In one embodiment the coupling member comprises a screwed joint or a flanged joint. In that way the main housing including the first drum shaft portion can be transported to clients as a unity, which makes transportation of the tyre building drum to the client easier.

According to a further aspect the invention provides a main housing with drive mechanism suitable and intended for a tyre building drum as described above.

According to a further aspect the invention provides as defined in claim 14, for a use of a tyre building drum as described above for building an unvulcanised tyre using rubber tyre components, wherein during building the tyre a turning up of the folding arms of the two drum halves is driven by shifting at least the first and second pull/push rod, wherein the shifting of the first and second pull/push rod is driven by a drive mechanism placed in the main housing.

In one embodiment during building the tyre a shifting of the two drum halves is driven by shifting at least the third and fourth pull/push rod, wherein the shifting of the third and fourth pull/push rod is driven by a drive mechanism placed in the main housing.

In one embodiment for shifting the drum halves without turning up the folding arms, on the one hand the first and third pull/push rod are substantially jointly driven and on the other hand the second and fourth pull/push rod are substantially jointly driven.

In one embodiment for turning up the folding arms on the one hand the first pull/push rod is shifted with respect to the third pull/push rod and on the other hand the second pull/push rod is shifted with respect to the fourth pull/push rod.

Preferred embodiments of the invention are defined in the dependent claims.

The aspects and measures described in this description and the claims of the application and/or shown in the drawings of this application may where possible also be used individually.

### SHORT DESCRIPTION OF THE DRAWINGS

The invention will be elucidated on the basis of a number of exemplary embodiments shown in the attached drawings, in which:
Figure 1 shows a schematic side view in cross-section of an exemplary embodiment of a tyre building drum according to the invention;
Figure 2 shows a schematic side view in cross-section of the tyre building drum of figure 1 in the condition in which rubber tyre components have been arranged on the drum halves;
Figure 3 shows a schematic side view in cross-section of the tyre building drum of figure 1 in the condition in which the drum halves are shifted towards each other;
Figure 4 shows a schematic side view in cross-section of the tyre building drum of figure 1 in the condition in which the folding arms have at least partially been lifted; and
Figure 5 shows a schematic side view in cross-section of a second exemplary embodiment of a tyre building drum according to the invention.

### DETAILED DESCRIPTION OF THE DRAWINGS

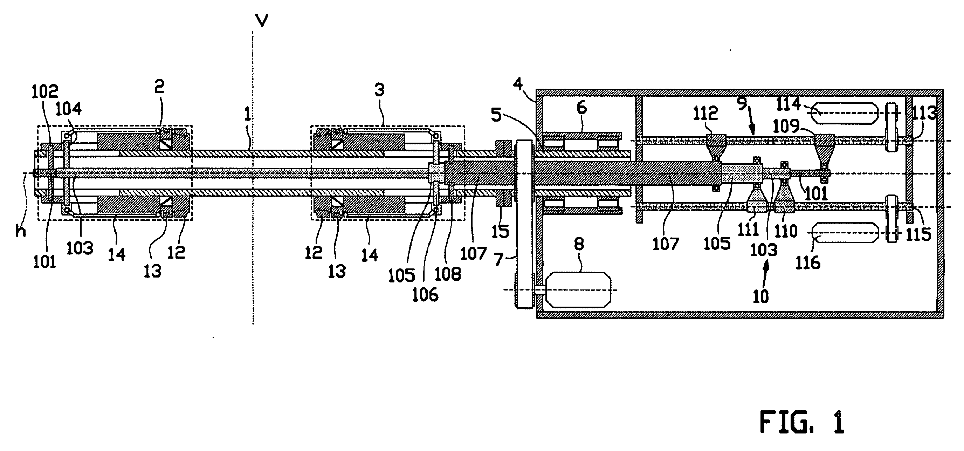

Figure 1 shows a side view in cross-section of an exemplary embodiment of a tyre building drum according to the invention. Building an unvulcanised tyre with rubber tyre components takes place on a first drum half 2 and a second drum half 3, that have been arranged at least almost substantially symmetrical with respect to the centre of the tyre building drum and around the drum shaft 1. The first and second drum halves 2, 3 can be moved in axial direction along the drum shaft 1. Each drum half 2, 3 comprises a folding arm unit having folding arms 14, that are connected to the drum half 2, 3 in question in a swivelling manner. Furthermore the drum halves 2, 3 are provided with a shoulder support 12 and a bead clamping mechanism 13.

The tyre building drum comprises a hollow drum shaft 1 in which a transmission for the drive of the drum halves 2, 3 and of the folding arm units is accommodated. Said transmission comprises four pull/push rods 101, 103, 105, 107 that are concentrically placed in the drum shaft 1.

The most central pull/push rod is the third pull/push rod 101, which near its outer end situated within the drum shaft 1, via a third connecting part or flight pin 102 is coupled to the first drum half 2 (not shown in detail). Around at least a portion of the central third pull/push rod 101 the tubular first pull/push rod 103 is placed, which near its outer end situated within the drum shaft 1 via a first connecting part or flight pin 104 is coupled to the folding arm unit 14 of the first drum half 2. Around at least a portion of first pull/push rod 103 the tubular second pull/push rod 105 is placed, which near its outer end situated within the drum shaft 1 via a second connecting part or flight pin 106 is coupled to the folding arm unit of the second drum half 3. Around at least a portion of the second pull/push rod 105 the tubular fourth pull/push rod 107 is placed, which near its outer end situated within the drum shaft 1 via a fourth connecting part or flight pin 108 is coupled to the second drum half 3.

The four pull/push rods 101, 103, 105, 107 extend substantially parallel to the centre line h of the drum shaft 1 to within the main housing 4 of the tyre building drum. In the main housing 4 a drive mechanism 9, 10 is placed with which the pull/push rods 101, 103, 105, 107 are coupled as described below in more detail.

The drum shaft 1 comprises a first and a second drum shaft portion, wherein the first drum shaft portion also called driving shaft 5, is rotatable in a bearing device 6 placed in the main housing 4. The second drum shaft portion is connected to the first drum shaft portion via a coupling member that is adapted for substantially axially and detachably coupling the first drum shaft portion to the second drum shaft portion, via a flange coupling 15.

The second drum shaft portion is provided with a first drum shaft slot for accommodating the first connecting part 104 for connecting the first pull/push rod 103 to the folding arm unit of the first drum half 2. The first drum shaft slot may further be adapted for accommodating the third connecting part 102 for connecting the third pull/push rod 101 to the first drum half 2. However in an alternative embodiment a separate drum shaft slot may have been provided for the third connecting part 102. The second drum shaft portion furthermore also comprises a second drum shaft slot for accommodating the second connecting part 106 for connecting the second pull/push rod 105 to the folding arm unit of the second drum half 3. The second drum shaft slot may furthermore be adapted for accommodating the fourth connecting part 108 for connecting the fourth pull/push rod 107 to the second drum half 3. However in an alternative embodiment a separate drum shaft slot may have been provided for the fourth connecting part.

The driving shaft 5 is coupled to a drum shaft driving motor 8 by means of a belt transmission 7, wherein the belt transmission 7 is placed at a side of the bearing device 6 extending away from the drive mechanism 9, 10. As shown in figure 1, the belt transmission 7 is placed outside of the main housing 4.

Furthermore within the main housing 4, the drive mechanism 9, 10 is placed substantially in the extension of the drum shaft 1, behind the bearing device 6. The four pull/push rods 101, 103, 105, 107 extend beyond the bearing device 6 up into the drive mechanism 9, 10.

The drive mechanism 9, 10 comprises a first spindle 115 and a second spindle 113, which are placed substantially on either side of a centre line h of the drum shaft 1. The first spindle 115 is provided with a thread which on either side of the middle of the drive mechanism has an equally large pitch but of an opposite direction. On the first spindle 115 on either side of the middle of the drive mechanism 10 a first flight nut 110 and a second flight nut 111 are arranged, wherein the first and second flight nut 110, 111 are connected to the first pull/push rod 103 and the second pull/push rod 105, respectively. In the same way the second spindle 113 is also provided with thread which on either side of the middle of the drive mechanism has an equally large pitch but of an opposite direction. On the second spindle 113 on either side of the middle of the drive mechanism 9 a third flight nut 109 and a fourth flight nut 112 are arranged, wherein the third and fourth flight nut 109, 112 are connected to the third pull/push rod 101 and the fourth pull/push rod 107, respectively. When driving the first 115 and second 113 spindle, respectively, the first and second flight nut 110, 111 and third and fourth flight nut 109, 112, respectively, will be driven at substantially the same speed but in opposite direction. As the pull/push rods 101, 103, 105, 107 move along with the drum shaft 1 and the drive mechanism 9, 10 is substantially fixated in the main housing 4, the pull/push rods 101, 103, 105, 107 are connected to the respective flight nuts, 109, 112, 110, 111 via a bearing.

Optionally the flight nuts 109, 110, 111 and 112 can be supported by linear guides.

The first spindle 115 and the second spindle 113 are each coupled to their own servomotor 116, 114 via a belt transmission.

The drive mechanism 9, 10 as discussed in detail above provides a considerable improvement in the synchronous movement of the drum halves 2, 3, and of the folding arms 14 of the drum halves 2, 3. For adjusting the position of the first drum half 2 and its folding arm mirror-symmetrically with respect to the position of the second drum half 3 and its folding arms, particularly mirror-symmetrically in perpendicular bisector plane v through the middle of the tyre building drum, the first pull/push rod 103 is substantially axially adjustably coupled to the first flight nut 110, and the third pull/push rod 101 is substantially axially adjustably coupled to the third flight nut 109. Optionally the second and/or fourth flight nut can also be substantially axially adjustably coupled to the pull/push rod in question.

In the embodiment as shown in figure 1, the drive mechanisms 9, 10 are placed on either side above and below the centre line h of the drum shaft 1. In this embodiment the spindles 113, 115 are placed parallel to the pull/push rods 101, 103, 105, 107 on a so-called 12 o'clock - 6 o'clock position. In an alternative embodiment the drive mechanisms can also be placed on other positions around the centre line h. For instance the drive mechanisms 9, 10 can be placed on either side of the centre line h in a substantially horizontal plane on a so-called 9 o'clock - 3 o'clock position, or the drive mechanisms 9, 10 can be placed at an angle wherein the intersection of the centre line h and the first 115 and second 113 spindle with a plane perpendicular form the vertices of a triangle, for instance on a so-called 8 o'clock - 4 o'clock position.

In an alternative embodiment the drive mechanism 9, 10 can be also be designed double. In that case each pull/push rod has its own spindle. Said four spindles can then be placed around the centre line h of the drum shaft 1, for instance on a so-called 12 o'clock - 3 o'clock - 6 o'clock - 9 o'clock position.

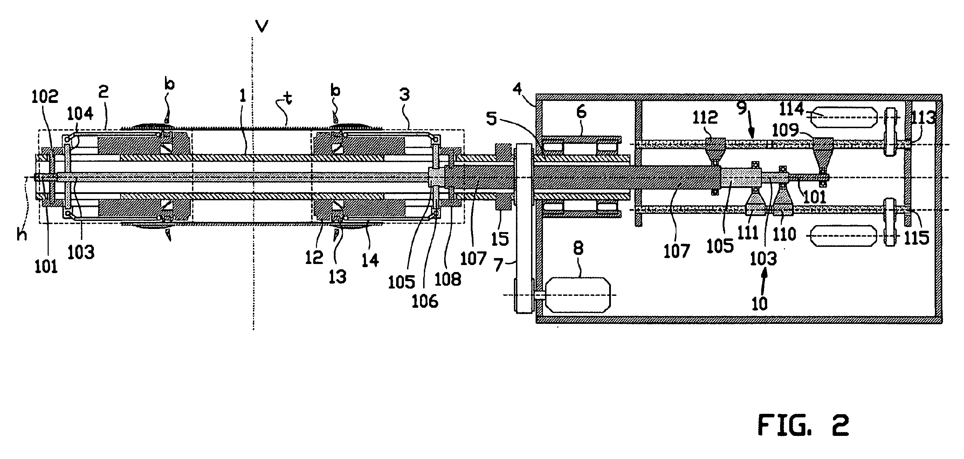

In use the tyre components t of rubber with the beads b are placed on the drum halves 2, 3 that are placed in a defined starting position, as shown in figure 2.

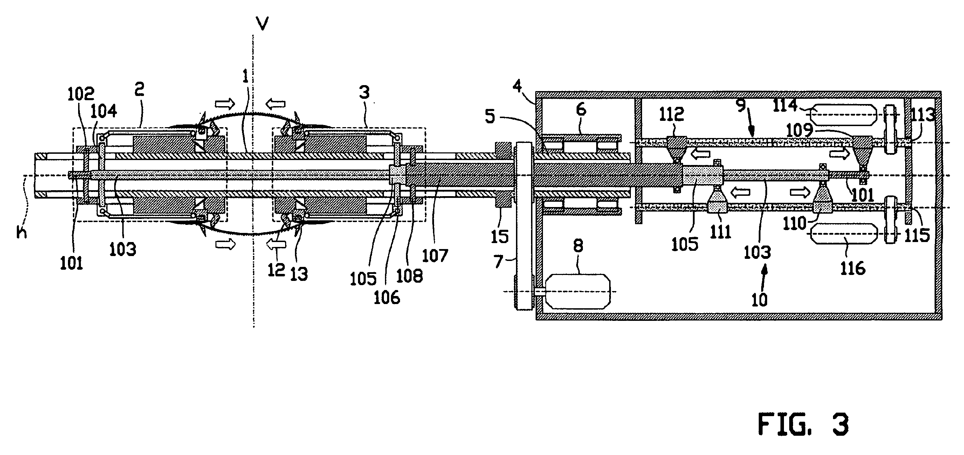

Subsequently the drum halves 2, 3 are shifted to the centre of the tyre building drum by shifting at least the third 101 and the fourth 107 pull/push rod, as shown in figure 3. For shifting the drum halves 2, 3 without turning up the folding arms 14, on the one hand the third 101 and first 103 pull/push rod are substantially jointly driven and simultaneously the fourth 107 and second 105 pull/push rod are substantially jointly driven. This can be achieved by driving the first and second spindle 115, 113 at the same speed and in the same direction by means of the first and second servomotor 116, 114.

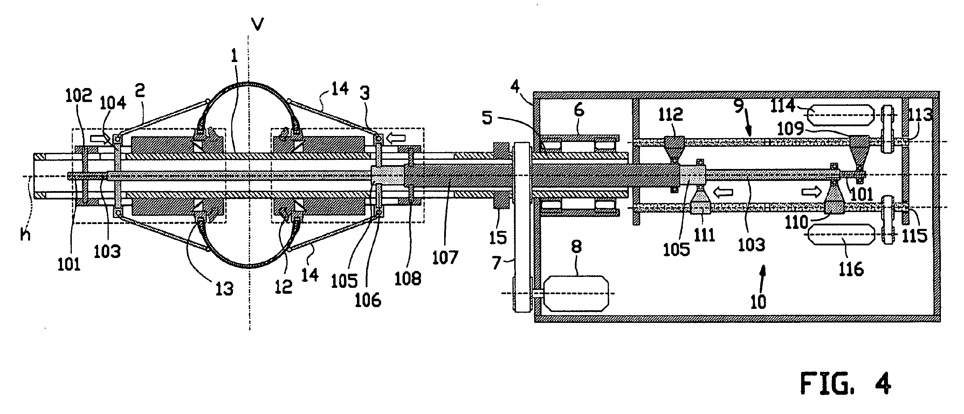

Subsequently the folding arms 14 are activated to stitch the rubber components. For swivelling the folding arms 14 upwards, as shown in figure 4, on the one hand the first pull/push rod 103 is moved with respect to the third pull/push rod 101 and simultaneously the second pull/push rod 105 is moved with respect to the fourth pull/push rod 107. When the drum halves 2, 3 are at a standstill during lifting the folding arms 14, only the first spindle 115 needs to be driven.

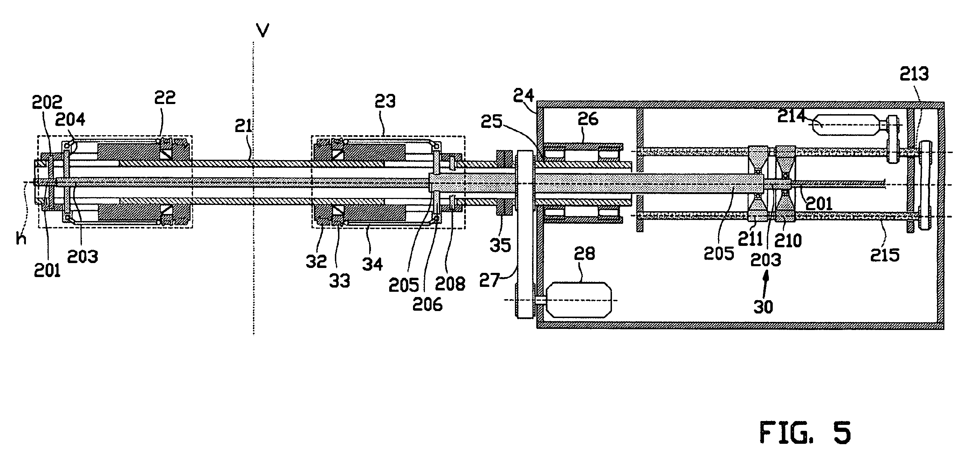

Figure 5 shows a second exemplary embodiment, wherein only the folding arms 34 of the first 22 and second 23 drum halves are driven by means of the first 203 and second 205 pull/push rods. The other movements of drum halves 22, 23 and/or other parts thereof but the folding arms 34 are driven in a conventional manner, for instance by means of a spindle or pneumatic conduit in the drum shaft 21.

In this second exemplary embodiment the first 22 and second 23 drum half are each connected to a flight nut (not shown) via a connecting part 202, 208, which flight nut is placed on a spindle 201 that is placed in the drum shaft 21 and extends up into the housing 24 as shown in figure 5. The connecting part 208 of the second drum half 23 extends through longitudinal slots (not shown) in the first 203 and second 205 pull/push rod, and is connected to the flight nut corresponding thereto on the spindle 201. For driving the two drum halves 22, 23 the spindle 201 is conventionally connected to a motor (not shown) placed in the housing 24.

Driving other movements in the drum halves, such as the movements of the shoulders supports 32 and the bead clamping mechanism 33, takes place conventionally, for instance using pneumatic drive mechanisms in the drum halves 22, 23 in question.

The drive shaft 25 is coupled to a drum shaft driving motor 28 by means of a belt transmission 27, wherein the belt transmission 27 is placed outside of the housing 24 at a side of the bearing device 26 that extends away from the drive mechanism 30.

Furthermore within the housing 24 the drive mechanism 30 is placed substantially in the extension of the drum shaft 21, behind the bearing device 26. The two pull/push rods 203, 205 extend past the bearing device 26 up into the drive mechanism 30.

The drive mechanism 30 comprises a first spindle 215 and a second spindle 213, that are placed substantially on either side of a centre line h of the drum shaft 21. Both spindles 215, 213 are provided with thread which on either side of the middle of the drive mechanism has an equally large pitch but of an opposite direction. The first pull/push rod 203, near its outer end that extends in the housing, is provided with a first flight body 210, which on either side of the first pull/push rod 203 is provided with flight nuts with which the flight body 210 is connected to the spindles 215, 213. The second pull/push rod 205, near its outer end that extends in the housing, is provided with a second flight body 211, which on either side of the second pull/push rod 205 is provided with flight nuts with which the flight body 211 is coupled to the spindles 215, 213.

Both spindles 215, 213 are rotation-fixedly connected and coupled to a motor 214 for a substantially simultaneous driving of the spindles. When driving the first 215, and second 213 spindle, respectively, the flight nuts of the first flight body 210 and the flight nuts of the second flight body, respectively, will be driven at substantially equal speed but in opposite direction. As a result the turn up of the folding arms 34 can be carried out in a highly controlled manner.

As the pull/push rods 203, 205 move along with the drum shaft 21 and the drive mechanism 30 is substantially fixated in the main housing 24 and therefore does not move along with the drum shaft 21, the pull/push rods 203, 205 are connected to the respective flight bodies 210, 211 via a bearing.

The above description is included to illustrate the operation of preferred embodiments of the invention and not to limit the scope of the invention. Starting from the above explanation many variations that fall within the scope of the present invention will be evident to an expert.

Briefly summarised the invention provides a tyre building drum comprising a main housing having a drum shaft extending from the main housing and two first and second drum halves arranged at least almost substantially symmetrical with respect to the centre of the tyre building drum and around the drum shaft, which drum halves can be moved in axial direction along the drum shaft. Each drum half comprises a folding arm unit having folding arms that are connected to the drum half in question in a swivelling manner and wherein the folding arm unit can be moved in axial direction along the drum shaft. In the drum shaft at least two pull/push rods are arranged that are movable in axial direction and extend up into the main housing and in the main housing and on the one hand are coupled to a drive mechanism. On the other hand a first pull/push rod is coupled to the folding arm unit of the first drum half, and a second pull/push rod is coupled to the folding arm unit of the second drum half.

## Claims

1. Tyre building drum for building an unvulcanised tyre using rubber tyre components, wherein the tyre building drum comprises a main housing (4; 24) having a drum shaft (1; 21) extending from the main housing (4; 24) and a first and second drum halve (2, 3; 22,23) arranged at least almost substantially symmetrical with respect to the centre of the tyre building drum and around the drum shaft (1; 21), which drum halves can be moved in axial direction along the drum shaft (1; 21), wherein each drum half (2,3; 22,23) comprises a folding arm unit having folding arms (14; 24), that are connected to the drum half (2,3; 22,23) in question in a swiveling manner, **characterized in that**
at least two pull/push rods (103,105; 203,205) are arranged in the drum shaft (1; 21) which pull/push rods are movable in axial direction and extend up into the main housing (4; 24) and in the main housing (4; 24) are coupled to a drive mechanism (10; 30),
wherein a first pull/push rod (103; 203) of the at least two pull/push rods is coupled to the folding arm unit of the first drum half (2; 22), and a second pull/push rod (105; 205) of the at least two pull/push rods is coupled to the folding arm unit of the second drum half (3; 23).

2. Tyre building drum according to claim 1, wherein the at least two pull/push rods further comprise a third pull/push rod (101) that is coupled to the first drum half (2), and a fourth pull/push rod (107) that is coupled to the second drum half (3).

3. Tyre building drum according to claim 1 or 2, wherein the at least two pull/push rods (103,105; 203, 205) are placed concentrically in the drum shaft (1; 21).

4. Tyre building drum according to claim 1, 2 or 3, wherein the main housing (4; 24) comprises a bearing device (6; 26), wherein with a first outer end the drum shaft (1; 21) is rotatably placed in the bearing device (6;26), preferably wherein the at least two pull/push rods (103,105; 203,205) extend beyond the first outer end of the drum shaft (1; 21) and are rotatably coupled to the drive mechanism (10; 30).

5. Tyre building drum according to claim 4, wherein the main housing (4; 24) comprises a drum shaft driving motor (8; 28) which by means of a belt transmission (7; 27) is coupled to the drum shaft (1; 21), wherein the belt transmission (7; 27) is placed at a side of the bearing device (6) that extends away from the drive mechanism (9,10; 30), preferably wherein the belt transmission (7; 27) is placed outside of the main housing (4; 24).

6. Tyre building drum according to any one of the preceding claims, wherein the drive mechanism (10; 30) is provided with a separate drive for each pull/push rod of the at least two pull/push rods (103,105; 203,205), wherein the separate drives each preferably comprise a linear motor or a spindle drive.

7. Tyre building drum according to any one of the claims 1-5, wherein the drive mechanism (10; 30) comprises a first spindle (115; 215), wherein the first spindle (115; 215) comprises thread which on either side of the middle of the drive mechanism has an equally large pitch but of an opposite direction, wherein on the first spindle (115; 215) on either side of the middle of the drive mechanism a first flight nut (110) and a second flight nut (111) are arranged, wherein the first and second flight nut (110, 111) are coupled to the first pull/push rod (103) and the second pull/push rod (105), respectively, preferably wherein the first pull/push rod (103) is coupled to the first flight nut (110) in a substantially axially adjustable manner.

8. Tyre building drum according to claim 7, when depending on claim 2, wherein the drive mechanism (9,10) comprises a second spindle (113), wherein the second spindle (113) comprises thread which on either side of the middle of the drive mechanism has an equally large pitch but of an opposite direction, wherein on the second spindle (113) on either side of the middle of the drive mechanism a third flight nut (109) and a fourth flight nut (112) are arranged, wherein the third and fourth flight nut (109, 112) are coupled to the third pull/push rod (101) and the fourth pull/push rod (107), respectively, preferably wherein the third pull/push rod (101) is coupled to the third flight nut (109) in a substantially axially adjustable manner.

9. Tyre building drum according to claim 8, wherein the first spindle (115) and the second spindle (113) are each drivable by their own drive, wherein the drive comprises servomotors (116, 114) or a hydraulic drive, and/or wherein the first spindle (115; 215) and the second spindle (113; 213) are placed substantially on either side of a centre line (h) of the drum shaft (1; 21).

10. Tyre building drum according to any one of the preceding claims, wherein the drum shaft (1; 21) is provided with a first drum shaft slot for accommodating a first connecting part (104; 204) for connecting the first pull/push rod (103; 203) to the folding arm unit (14; 34) of the first drum half (2; 22) and wherein the drum shaft (1; 21) is provided with a second drum shaft slot for accommodating a second connecting part (106; 206) for connecting the second pull/push rod (105; 205) to the folding arm unit (14; 34) of the second drum half (3; 23).

11. Tyre building drum according to claim 10, when depending on claim 2, wherein the first drum shaft slot is adapted for accommodating a third connecting part (102) for connecting the third pull/push rod (101) to the first drum half (2) and wherein the second drum shaft slot is adapted for accommodating a fourth connecting part (108) for connecting the fourth pull/push rod (107) to the second drum half (3).

12. Tyre building drum according to any one of the preceding claims, when depending on claim 4, wherein the drum shaft (1; 21) comprises a first and a second drum shaft portion, wherein the first drum shaft portion comprises the first outer end that is rotatably placed in the bearing device (6; 26), wherein a second outer end of the first drum shaft portion that extends away from the first outer end comprises a coupling member (15; 35) for substantially axially and detachably coupling the first drum shaft portion to the second drum shaft portion, preferably wherein the coupling member (15; 35) comprises a screwed joint or a flanged joint.

13. Main housing with drive mechanism suitable and intended for a tyre building drum according to one or several of the preceding claims.

14. Use of a tyre building drum according to any one of the claims 1-12 for building an unvulcanised tyre using rubber tyre components, wherein during building the tyre turning up the folding arms (14; 34) of the drum halves (2,3; 22,23) is driven by shifting at least the first (103; 203) and second (105; 205) pull/push rod, wherein the shifting of the first and second pull/push rod is driven by a drive mechanism (10; 30) placed in the main housing (4; 24).

15. Use according to claim 14, when depending on claim 2, wherein during building the tyre a shifting of the two drum halves (2,3) is driven by shifting at least the third (101) and fourth (107) pull/push rod, wherein the shifting of the third and fourth pull/push rod is driven by a drive mechanism (10) placed in the main housing (4), preferably wherein for shifting the drum halves (2,3) without turning up the folding arms (14), on the one hand the first and third pull/push rod are substantially jointly driven and on the other hand the second and fourth pull/push rod are substantially jointly driven, and/or wherein for turning up the folding arms on the one hand the first pull/push rod is shifted with respect to the third pull/push rod and on the other hand the second pull/push rod is shifted with respect to the fourth pull/push rod.

## Patentansprüche

1. Reifenherstellungs-Trommel zum Herstellen eines unvulkanisierten Reifens unter Verwendung von Gummi-Reifenkomponenten, wobei die Reifenherstellungs-Trommel ein Hauptgehäuse (4; 24) umfasst, welches eine Trommelwelle (1; 21), welche sich von dem Hauptgehäuse (4; 24) erstreckt, und eine erste und zweite Trommelhälfte (2, 3; 22, 23) aufweist, welche wenigstens annähernd im Wesentlichen symmetrisch bezüglich des Mittelpunkts der Reifenherstellungs-Trommel und um die Trommelwelle (1; 21) herum angeordnet sind, welche Trommelhälften in axialer Richtung entlang der Trommelwelle (1; 21) bewegt werden können, wobei jede Trommelhälfte (2, 3; 22, 23) eine Faltarmeinheit umfasst, welche Faltarme (14; 24) aufweist, welche mit der jeweiligen Trommelhälfte (2, 3; 22, 23) schwenkend verbunden sind,
**dadurch gekennzeichnet, dass** wenigstens zwei Zug/Druck-Stangen (103, 105; 203, 205) in der Trommelwelle (1; 21) angeordnet sind, welche Zug/Druck-Stangen in axialer Richtung bewegbar sind und sich bis in das Hauptgehäuse (4; 24) hinein erstrecken und in dem Hauptgehäuse (4; 24) mit einem Antriebs-Mechanismus (10; 30) gekoppelt sind,
wobei eine erste Zug/Druck-Stange (103; 203) der wenigstens zwei Zug/Druck-Stangen mit der Faltarmeinheit der ersten Trommelhälfte (2; 22) gekoppelt ist, und eine zweite Zug/Druck-Stange (105; 205) der wenigstens zwei Zug/Druck-Stangen mit der Faltarmeinheit der zweiten Trommelhälfte (3; 23) gekoppelt ist.

2. Reifenherstellungs-Trommel nach Anspruch 1,
wobei die wenigstens zwei Zug/Druck-Stangen ferner eine dritte Zug/Druck-Stange (101) umfassen, welche mit der ersten Trommelhälfte (2) gekoppelt ist, und eine vierte Zug/Druck-Stange (107) umfassen, welche mit der zweiten Trommelhälfte (3) gekoppelt ist.

3. Reifenherstellungs-Trommel nach Anspruch 1 oder 2, wobei die wenigstens zwei Zug/Druck-Stangen (103, 105; 203, 205) konzentrisch in der Trommelwelle (1; 21) platziert sind.

4. Reifenherstellungs-Trommel nach Anspruch 1, 2 oder 3, wobei das Hauptgehäuse (4; 24) eine Lagervorrichtung (6; 26) umfasst, wobei die Trommelwelle (1; 21) mit einem ersten äußeren Ende rotierbar in der Lagervorrichtung (6; 26) platziert ist, wobei vorzugsweise die wenigstens zwei Zug/Druck-Stangen (103, 105; 203, 205) sich über das erste äußere Ende der Trommelwelle (1; 21) hinaus erstrecken und sie rotierbar mit dem Antriebs-Mechanismus (10; 30) gekoppelt sind.

5. Reifenherstellungs-Trommel nach Anspruch 4, wobei das Hauptgehäuse (4; 24) einen Trommelwellen-Antriebsmotor (8; 28) umfasst, welcher mittels eines Übertragungsriemens (7; 27) an die Trommelwelle (1; 21) gekoppelt ist, wobei der Übertragungsriemen (7; 27) an einer Seite der Lagervorrichtung (6) platziert ist, welche sich von dem Antriebs-Mechanismus (9, 10; 30) weg erstreckt, wobei vorzugsweise der Übertragungsriemen (7; 27) außerhalb des Hauptgehäuses (4; 24) platziert ist.

6. Reifenherstellungs-Trommel nach einem der vorhergehenden Ansprüche, wobei der Antriebs-Mechanismus (10; 30) mit einem separaten Antrieb für jede Zug/Druck-Stange der wenigstens zwei Zug/Druck-Stangen (103, 105; 203, 205) bereitgestellt ist, wobei die separaten Antriebe jeweils vorzugsweise einen Linearmotor oder einen Spindeltrieb umfassen.

7. Reifenherstellungs-Trommel nach einem der Ansprüche 1 bis 5, wobei der Antriebs-Mechanismus (10; 30) eine erste Spindel (115; 215) umfasst, wobei die erste Spindel (115; 215) ein Gewinde umfasst, welches auf beiden Seiten der Mitte des Antriebs-Mechanismus eine gleich große, jedoch entgegengesetzt gerichtete Gewindesteigung aufweist, wobei an der ersten Spindel (115; 215) auf beiden Seiten der Mitte des Antriebs-Mechanismus eine erste Mitnahmemutter (110) und eine zweite Mitnahmemutter (111) angeordnet sind, wobei die erste und zweite Mitnahmemutter (110, 111) jeweils mit der ersten Zug/Druck-Stange (103) und der zweiten Zug/Druck-Stange (105) gekoppelt sind, wobei vorzugsweise die erste Zug/Druck-Stange (103) mit der ersten Mitnahmemutter (110) im Wesentlichen axial einstellbar gekoppelt ist.

8. Reifenherstellungs-Trommel nach Anspruch 7, abhängig von Anspruch 2, wobei der Antriebs-Mechanismus (9, 10) eine zweite Spindel (113) umfasst, wobei die zweite Spindel (113) ein Gewinde umfasst, welches auf beiden Seiten der Mitte des Antriebs-Mechanismus eine gleich große, jedoch entgegengesetzt gerichtete Gewindesteigung aufweist, wobei an der zweiten Spindel (113) auf beiden Seiten der Mitte des Antriebs-Mechanismus eine dritte Mitnahmemutter (109) und eine vierte Mitnahmemutter (112) angeordnet sind, wobei die dritte und vierte Mitnahmemutter (109, 112) jeweils mit der dritten Zug/Druck-Stange (101) und der vierten Zug/Druck-Stange (107) gekoppelt sind, wobei vorzugsweise die dritte Zug/Druck-Stange (101) mit der dritten Mitnahmemutter (109) im Wesentlichen axial einstellbar gekoppelt ist.

9. Reifenherstellungs-Trommel nach Anspruch 8, wobei die erste Spindel (115) und die zweite Spindel (113) jeweils durch ihren eigenen Antrieb antreibbar sind, wobei der Antrieb Servomotoren (116, 114) oder einen hydraulischen Antrieb umfasst, oder/und wobei die erste Spindel (115, 215) und die zweite Spindel (113, 213) im Wesentlichen auf beiden Seiten einer Mittellinie (h) der Trommelwelle (1; 21) platziert sind.

10. Reifenherstellungs-Trommel nach einem der vorhergehenden Ansprüche, wobei die Trommelwelle (1; 21) mit einer ersten Trommelwellen-Ausnehmung zum Aufnehmen eines ersten Verbindungsteils (104; 204) zum Verbinden der ersten Zug/Druck-Stange (103; 203) mit der Faltarmeinheit (14; 34) der ersten Trommelhälfte (2; 22) bereitgestellt ist, und wobei die Trommelwelle (1; 21) mit einer zweiten Trommelwellen-Ausnehmung zum Aufnehmen eines zweiten Verbindungsteils (106; 206) zum Verbinden der zweiten Zug/Druck-Stange (105; 205) mit der Faltarmeinheit (14; 34) der zweiten Trommelhälfte (3; 23) bereitgestellt ist.

11. Reifenherstellungs-Trommel nach Anspruch 10, abhängig von Anspruch 2, wobei die erste Trommelwellen-Ausnehmung dazu eingerichtet ist, ein drittes Verbindungsteil (102) zum Verbinden der dritten Zug/Druck-Stange (101) mit der ersten Trommelhälfte (2) aufzunehmen, und wobei die zweite Trommelwellen-Ausnehmung dazu eingerichtet ist, ein viertes Verbindungsteil (108) zum Verbinden der vierten Zug/Druck-Stange (107) mit der zweiten Trommelhälfte (3) aufzunehmen.

12. Reifenherstellungs-Trommel nach einem der vorhergehenden Ansprüche, abhängig von Anspruch 4, wobei die Trommelwelle (1; 21) einen ersten und einen zweiten Trommelwellen-Abschnitt umfasst, wobei der erste Trommelwellen-Abschnitt das erste äußere Ende umfasst, welches rotierbar in der Lagervorrichtung (6; 26) platziert ist, wobei ein zweites äußeres Ende des ersten Trommelwellen-Abschnitts, welches sich von dem ersten äußeren Ende weg erstreckt, ein Kopplungselement (15; 35) zum im Wesentlichen axialen und lösbaren Koppeln des ersten Trommelwellen-Abschnitts mit dem zweiten Trommelwellen-Abschnitt umfasst, wobei vorzugsweise das Kopplungselement (15; 35) eine Schraubverbindung oder eine Flanschverbindung umfasst.

13. Hauptgehäuse mit Antriebs-Mechanismus, welches geeignet und vorgesehen ist für eine Reifenherstellungs-Trommel nach einem oder mehreren der vorgehenden Ansprüchen.

14. Verwendung einer Reifenherstellungs-Trommel nach einem der Ansprüche 1 bis 12 zum Herstellen eines unvulkanisierten Reifens unter Verwendung von Gummi-Reifenkomponenten, wobei während des Herstellens des Reifens ein Aufklappen der Faltarme (14; 34) der Trommelhälften (2, 3; 22, 23) durch Verschieben von wenigstens der ersten (103; 203) und zweiten (105; 205) Zug/Druck-Stange angetrieben wird, wobei das Verschieben der ersten und zweiten Zug/Druck-Stange durch einen Antriebs-Mechanismus (10; 30) angetrieben wird, welcher in dem Hauptgehäuse (4; 24) platziert ist.

15. Verwendung nach Anspruch 14, abhängig von Anspruch 2, wobei während des Herstellens des Reifens ein Verschieben der beiden Trommelhälften (2, 3) durch Verschieben von wenigstens einer dritten (101) und vierten (107) Zug/Druck-Stange angetrieben wird, wobei das Verschieben der dritten und vierten Zug/Druck-Stange durch einen Antriebs-Mechanismus (10) angetrieben wird, welcher in dem Hauptgehäuse (4) platziert ist, wobei vorzugsweise zum Verschieben der Trommelhälften (2, 3) ohne Ausklappen der Faltarme (14), einerseits die erste und dritte Zug/Druck-Stange im Wesentlichen gemeinsam angetrieben werden und andererseits die zweite und vierte Zug/Druck-Stange im Wesentlichen gemeinsam angetrieben werden, oder/und wobei zum Ausklappen der Faltarme einerseits die erste Zug/Druck-Stange bezüglich der dritten Zug/Druck-Stange verschoben wird und andererseits die zweite Zug/Druck-Stange bezüglich der vierten Zug/Druck-Stange verschoben wird.

## Revendications

1. Tambour de fabrication de pneu pour fabriquer un pneu non vulcanisé à l'aide de composants de pneu en caoutchouc, dans lequel le tambour de fabrication de pneu comprend un boîtier principal (4 ; 24) possédant un arbre (1 ; 21) de tambour s'étendant depuis le boîtier principal (4 ; 24) et un première et seconde moitié (2, 3 ; 22, 23) de tambour agencées au moins de façon presque sensiblement symétrique par rapport au centre du tambour de fabrication de pneu et autour de l'arbre (1 ; 21) de tambour, lesdites moitiés de tambour peuvent être déplacées dans une direction axiale le long de l'arbre (1 ; 21) de tambour, dans lequel chaque moitié (2, 3 ; 22, 23) de tambour comprend une unité de bras pliants possédant des bras pliants (14 ; 24), qui sont reliés à la moitié (2, 3 ; 22, 23) de tambour en question de manière pivotante, **caractérisé en ce que**
au moins deux tiges de traction/poussée (103, 105 ; 203, 205) sont agencées dans l'arbre (1 ; 21) de tambour, lesdites tiges de traction/poussée (1 ; 21) sont mobiles dans la direction axiale et s'étendent jusque dans le boîtier principal (4 ; 24) et, dans le boîtier principal (4 ; 24), sont accouplées à un mécanisme d'entraînement (10 ; 30),
dans lequel une première tige de traction/poussée (103 ; 203) des au moins deux tiges de traction/poussée est accouplée à l'unité de bras pliants de la première moitié (2 ; 22) de tambour, et une deuxième tige de traction/poussée (105 ; 205) des au moins deux tiges de traction/poussée est accouplée à l'unité de bras pliants de la seconde moitié (3 ; 23) de tambour.

2. Tambour de fabrication de pneu selon la revendication 1, dans lequel les au moins deux tiges de traction/poussée comprennent en outre une troisième tige de traction/poussée (101) qui est accouplée à la première moitié (2) de tambour, et une quatrième tige de traction/poussée (107) qui est accouplée à la seconde moitié (3) de tambour.

3. Tambour de fabrication de pneu selon la revendication 1 ou 2, dans lequel les au moins deux tiges de traction/poussée (103, 105 ; 203, 205) sont placées de manière concentrique dans l'arbre (1 ; 21) de tambour.

4. Tambour de fabrication de pneu selon la revendication 1, 2 ou 3, dans lequel le boîtier principal (4 ; 24) comprend un dispositif de palier (6 ; 26), dans lequel, par une première extrémité extérieure, l'arbre (1 ; 21) de tambour est placé rotatif dans le dispositif de palier (6 ; 26), de préférence dans lequel les au moins deux tiges de traction/poussée (103, 105 ; 203, 205) s'étendent au-delà de la première extrémité extérieure de l'arbre (1 ; 21) de tambour et sont accouplées rotatives au mécanisme d'entraînement (10 ; 30).

5. Tambour de fabrication de pneu selon la revendication 4, dans lequel le boîtier principal (4 ; 24) comprend un moteur d'entraînement (8 ; 28) d'arbre de tambour qui, au moyen d'une transmission à courroie (7 ; 27), est accouplé à l'arbre (1 ; 21) de tambour, dans lequel la transmission à courroie (7 ; 27) est placée sur un côté du dispositif de palier (6) qui s'étend loin du mécanisme d'entraînement (9, 10 ; 30), de préférence dans lequel la transmission à courroie (7 ; 27) est placée à l'extérieur du boîtier principal (4 ; 24).

6. Tambour de fabrication de pneu selon l'une quelconque des revendications précédentes, dans lequel le mécanisme d'entraînement (10 ; 30) est doté d'un entraînement distinct pour chaque tige de traction/poussée des au moins deux tiges de traction/poussée (103, 105 ; 203, 205), dans lequel les entraînements distincts comprennent de préférence chacun un moteur linéaire ou un entraînement à broches.

7. Tambour de fabrication de pneu selon l'une quelconque des revendications 1 à 5, dans lequel le mécanisme d'entraînement (10 ; 30) comprend une première broche (115 ; 215), dans lequel la première broche (115 ; 215) comprend un filetage qui, de part et d'autre du milieu du mécanisme d'entraînement, présente un pas de grandeur égale mais d'une direction opposée, dans lequel, sur la première broche (115 ; 215), sont agencés, de part et d'autre du milieu du mécanisme d'entraînement, un premier écrou d'entraînement (110) et un deuxième écrou d'entraînement (111), dans lequel les premier et deuxième écrous d' entraînements (110, 111) sont respectivement accouplés à la première tige de traction/poussée (103) et à la deuxième tige de traction/poussée (105), de préférence dans lequel la première tige de traction/poussée (103) est accouplée au premier écrou d' entraînement (110) d'une façon sensiblement réglable axialement.

8. Tambour de fabrication de pneu selon la revendication 7, lorsqu'elle dépend de la revendication 2, dans lequel le mécanisme d'entraînement (9, 10) comprend une seconde broche (113), dans lequel la seconde broche (113) comprend un filetage qui, de part et d'autre du milieu du mécanisme d'entraînement, présente un pas de grandeur égale mais d'une direction opposée, dans lequel, sur la seconde broche (113), sont agencés, de part et d'autre du milieu du mécanisme d'entraînement, un troisième écrou d'entraînement (109) et un quatrième écrou d'entraînement (112), dans lequel les troisième et quatrième écrous d' entraînements (109, 112) sont respectivement accouplés à la troisième tige de traction/poussée (101) et à la quatrième tige de traction/poussée (107), de préférence dans lequel la troisième tige de traction/poussée (101) est accouplée au troisième écrou d'entraînement (109) d'une façon sensiblement réglable axialement.

9. Tambour de fabrication de pneu selon la revendication 8, dans lequel la première broche (115) et la seconde broche (113) peuvent être chacune entraînées par leur propre entraînement, dans lequel l'entraînement comprend des servomoteurs (116, 114) ou un entraînement hydraulique, et/ou dans lequel la première broche (115 ; 215) et la seconde broche (113 ; 213) sont placées sensiblement de part et d'autre d'une ligne centrale (h) de l'arbre (1 ; 21) de tambour.

10. Tambour de fabrication de pneu selon l'une quelconque des revendications précédentes, dans lequel l'arbre (1 ; 21) de tambour est pourvu d'une première fente d'arbre de tambour destinée à accueillir une première pièce de liaison (104 ; 204) servant à relier la première tige de traction/poussée (103 ; 203) à l'unité de bras pliants (14 ; 34) de la première moitié (2 ; 22) de tambour et dans lequel l'arbre (1 ; 21) de tambour est pourvu d'une seconde fente d'arbre de tambour destinée à accueillir une deuxième pièce de liaison (106 ; 206) servant à relier la deuxième tige de traction/poussée (105 ; 205) à l'unité de bras pliants (14 ; 34) de la seconde moitié (3 ; 23) de tambour.

11. Tambour de fabrication de pneu selon la revendication 10, lorsqu'elle dépend de la revendication 2, dans lequel la première fente d'arbre de tambour est conçue pour accueillir une troisième pièce de liaison (102) servant à relier la troisième tige de traction/poussée (101) à la première moitié (2) de tambour et dans lequel la seconde fente d'arbre de tambour est conçue pour accueillir une quatrième pièce de liaison (108) servant à relier la quatrième tige de traction/poussée (107) à la seconde moitié (3) de tambour.

12. Tambour de fabrication de pneu selon l'une quelconque des revendications précédentes, lorsqu'elle dépend de la revendication 4, dans lequel l'arbre (1 ; 21) de tambour comprend une première et une seconde partie d'arbre de tambour, dans lequel la première partie d'arbre de tambour comprend la première extrémité extérieure qui est placée rotative dans le dispositif de palier (6 ; 26), dans lequel une seconde extrémité extérieure de la première partie d'arbre de tambour qui s'étend loin de la première extrémité extérieure comprend un organe d'accouplement (15 ; 35) destiné à accoupler de façon axiale et amovible la première partie d'arbre de tambour à la seconde partie d'arbre de tambour, de préférence dans lequel l'organe d'accouplement (15 ; 35) comprend un raccord vissé ou un raccord à bride.

13. Boîtier principal doté d'un mécanisme d'entraînement approprié et destiné à un tambour de fabrication de pneu selon une ou plusieurs des revendications précédentes.

14. Utilisation d'un tambour de fabrication de pneu selon l'une quelconque des revendications 1 à 12 pour fabriquer un pneu non vulcanisé à l'aide de composants de pneu en caoutchouc, dans laquelle, lors de la fabrication du pneu, le redressement des bras pliants (14 ; 34) des moitiés (2, 3 ; 22, 23) de tambour est entraîné en déplaçant au moins la première (103 ; 203) et la deuxième (105 ; 205) tige de traction/poussée, dans laquelle le déplacement des première et deuxième tiges de traction/poussée est entraîné par un mécanisme d'entraînement (10 ; 30) placé dans le boîtier principal (4 ; 24).

15. Utilisation selon la revendication 14, lorsqu'elle dépend de la revendication 2, dans laquelle, lors de la fabrication du pneu, un déplacement des deux moitiés (2, 3) de tambour est entraîné en déplaçant au moins la troisième (101) et la quatrième (107) tige de traction/poussée, dans laquelle le déplacement des troisième et quatrième tiges de traction/poussée est entraîné par un mécanisme d'entraînement (10) placé dans le boîtier principal (4), de préférence dans laquelle, pour déplacer les moitiés (2, 3) de tambour sans redresser les bras pliants (14), d'une part, les première et troisième tiges de traction/poussée sont sensiblement entraînées conjointement et d'autre part les deuxième et quatrième tiges de traction/poussée sont sensiblement entraînées conjointement, et/ou dans laquelle pour redresser les bras pliants, d'une part la première tige de traction/poussée est déplacée par rapport à la troisième tige de traction/poussée et d'autre part la deuxième tige de traction/poussée est déplacée par rapport à la quatrième tige de traction/poussée.
